# EUROPEAN PATENT SPECIFICATION

(11) **EP 3 512 235 B1**
(45) Date of publication and mention of the grant of the patent: **21.09.2022**
(21) Application number: 18802249.5
(22) Date of filing: 15.05.2018
(51) Int. Cl.: H04B 7/06, H04W 24/04

(54) **COMMUNICATION METHODS AND DEVICES**
KOMMUNIKATIONSVERFAHREN UND -VORRICHTUNGEN
PROCÉDÉS ET DISPOSITIFS DE COMMUNICATION

(30) Priority: 15.05.2017 CN 201710339770
(43) Date of publication of application: 17.07.2019
(60) Divisional application: 21185757.8
(73) Proprietor: Huawei Technologies Co., Ltd., Longgang District Shenzhen, Guangdong 518129 (CN)
(72) Inventor: GUAN, Peng, Shenzhen, Guangdong 518129 (CN); ZHANG, Xi, Shenzhen, Guangdong 518129 (CN); HUANG, Huang, Shenzhen, Guangdong 518129 (CN)
(74) Representative: Thun, Clemens
(86) International application number: PCT/CN2018/086921
(87) International publication number: WO 2018/210243

(56) References cited:
- EP-A1- 2 942 888
- WO-A1-2017/052330
- CN-A- 103 828 257
- CN-A- 106 332 226
- CN-A- 106 465 148
- US-A1- 2016 337 916
- HUAWEI ET AL: "Multi-beam transmission for robustness", 3GPP DRAFT; R1-1708136, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 6 May 2017 (2017-05-06), XP051262271, Retrieved from the Internet: URL:http://www.3gpp.org/ftp/tsg_ran/WG1_RL 1/TSGR1_89/Docs/ [retrieved on 2017-05-06]
- HUAWEI: "Multi-beam transmission for robustness, R1-1708136", 3GPP TSG RAN WG1 Meeting, 6 May 2017 (2017-05-06), XP051262271,
- FUJITSU: "Discussion on beam failure recovery procedure, Rl-1704478", 3GPP TSG RAN WG1 Meeting, 7 April 2017 (2017-04-07), XP051242622,

## Description

### TECHNICAL FIELD

Embodiments of this application relate to the field of communications technologies, and in particular, to two communication methods, a base station, a terminal, two computer storage media and a computer program product.

### BACKGROUND

In 5G standards that are currently under discussion, a multi-beam concept is introduced regarding control channel transmission. To improve robustness of a control channel, a terminal may be configured to monitor multiple beams.

Based on the discussion of 5G, multiple beams can be maintained between a base station and a terminal. Multiple beams that are used in control channel transmission and that are monitored may be a subset of the maintained multiple beams. Therefore, the base station needs to configure specific beams to be monitored by the terminal.

HUAWEI ET AL, "Multi-beam transmission for robustness", vol. RAN WG1, no. Hangzhou, China; 20170515 - 20170519, (20170506), 3GPP DRAFT; R1-1708136, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/tsg_ran/WG1_RL1/TSGR1_89/Docs/, (20170506), relates to multi-beam transmission for robustness, it discloses that a UE can be configured to monitor NR-PDCCH on M beam pair links simultaneously.

Currently, the prior art does not provide a technical solution for a base station to configure specific beams to be monitored by a terminal.

### SUMMARY

This application provides two communication methods, a base station, a terminal, two computer storage media and a computer program product, and specifically, provides a technical solution for a base station to configure specific beams to be monitored by a terminal.

The invention is defined in the independent claims. Additional features of the invention are provided in the dependent claims. The following "aspects" and "embodiments" in this Summary section relate to non-claimed examples, being useful for understanding the invention.

According to a first aspect, this application provides a communication method and a communications apparatus.

In a possible design, the communication method may include: generating beam configuration information, where the beam configuration information includes beam indication information and beam monitoring information; and then sending the beam configuration information to a terminal. The method provided in the first aspect may be performed by a base station. By using the communication method provided in the technical solution, the base station may configure the beam indication information and the beam monitoring information for the terminal. Subsequently, the terminal may perform uplink communication or downlink communication with the base station based on the beam configuration information.

In a possible design, the beam monitoring information is used to indicate an offset, where the offset is an offset of a monitoring time unit relative to a starting time unit of a monitoring period within the monitoring period. In the technical solution, the terminal may not monitor each receive beam on each symbol, thereby helping to reduce power consumption of the terminal and saving a resource.

In a possible design, the beam monitoring information is used to indicate a search space, where the search space is a set of time-frequency resources, on which a beam is monitored, in time-frequency resources within a monitoring period. In the technical solution, the terminal may not monitor each receive beam on each symbol, thereby helping to reduce power consumption of the terminal and saving a resource.

In a possible design, the method may further include: receiving a request message sent by the terminal, where the request message is used to request the beam configuration information. The possible design provides an implementation in which the terminal triggers the base station to generate the beam configuration information. Certainly, this application is not limited thereto.

In a possible design, the method may further include: receiving capability information sent by the terminal, where the capability information includes at least one of the following: information about a capability of the terminal to simultaneously monitor multiple beams, and information about a capability of the terminal to sequentially monitor multiple beams. In this case, the generating beam configuration information may include: generating the beam configuration information based on the capability information of the terminal. In the possible design, the base station generates the beam configuration information based on the capability information of the terminal, so that a problem that the terminal cannot perform beam configuration based on the beam configuration information because of inconsistency between the beam configuration information and the capability information of the terminal can be reduced as much as possible, thereby enhancing terminal management performance of the base station.

In a possible design, the sending the beam configuration information to a terminal may include: sending the beam configuration information to the terminal by using at least one of radio resource control (RRC) signaling, Media Access Control (MAC) signaling, and downlink control information (DCI). For an implementation of the signaling in the possible design, refer to the following description. Details are not described herein again.

Correspondingly, this application further provides a communications apparatus. The apparatus may implement the communication method in the first aspect. For example, the apparatus may be a base station, and may implement the foregoing method by using software, hardware or hardware executing corresponding software.

In a possible design, the apparatus may include a processor and a memory. The processor is configured to support corresponding functions that are executed by the apparatus and that are in the foregoing method in the first aspect. The memory is configured to couple with the processor, and store data and a program (an instruction) that are required by the apparatus. In addition, the apparatus may further include a communications interface, configured to support communication between the apparatus and another network element. The communications interface may be a transceiver.

In a possible design, the apparatus may include a processing unit and a sending unit. The processing unit is configured to generate beam configuration information, where the beam configuration information includes beam indication information and beam monitoring information. The sending unit is configured to send the beam configuration information to a terminal.

In a possible design, the apparatus may further include a receiving unit, configured to receive a request message sent by the terminal, where the request message is used to request the beam configuration information.

According to a second aspect, this application provides another communication method and another communications apparatus.

In a possible design, the communication method may include: receiving beam configuration information sent by a base station, where the beam configuration information includes beam indication information and beam monitoring information; and then communicating with the base station based on the beam configuration information. The method may be performed by a terminal.

In a possible design, the beam monitoring information is used to indicate an offset, where the offset is an offset of a time of monitoring a beam relative to a starting time of a time period within a monitoring time unit; or a search space, where the search space is a set of time-frequency resources, on which a beam is monitored, within a monitoring time unit. In the technical solution, the terminal communicates with the base station based on the beam configuration information, and therefore may not monitor each receive beam on each symbol, thereby helping to reduce power consumption of the terminal and saving a resource.

In a possible design, the method may further include: sending a request message, where the request message is used to request the beam configuration information. The terminal may send the request message to the base station when, for example, but is not limited to, current beam configuration information is inconsistent with capability information of the terminal.

In a possible design, the method may further include: sending capability information of the terminal, where the capability information may include at least one of the following: information about a capability of the terminal to simultaneously monitor multiple beams, and information about a capability of the terminal to sequentially monitor multiple beams; and the capability information is used by the base station to determine the beam configuration information.

In a possible design, the receiving beam configuration information sent by a base station may include: receiving, by using at least one of RRC signaling, MAC signaling, and DCI, the beam configuration information sent by the base station.

In a possible design, the communicating with the base station based on the beam configuration information may include: after the beam configuration information takes effect, communicating with the base station based on the beam configuration information.

In a possible design, the communicating with the base station based on the beam configuration information may include: communicating with the base station based on some of beams indicated by the beam indication information.

Correspondingly, this application further provides a communications apparatus. The apparatus may implement the communication method in the second aspect. For example, the apparatus may be a terminal, and may implement the foregoing method by using software, hardware or hardware executing corresponding software.

In a possible design, the apparatus may include a processor and a memory. The processor is configured to support corresponding functions that are executed by the apparatus and that are in the foregoing method in the second aspect. The memory is configured to couple with the processor, and store data and a program (an instruction) that are required by the apparatus. In addition, the apparatus may further include a communications interface, configured to support communication between the apparatus and another network element. The communications interface may be a transceiver.

In a possible design, the apparatus may include a transceiver unit, configured to: receive beam configuration information sent by a base station, where the beam configuration information includes beam indication information and beam monitoring information; and then communicate with the base station based on the beam configuration information. The transceiver unit may include a sending unit and a receiving unit.

In a possible design, the transceiver unit is further configured to send a request message, where the request message is used to request the beam configuration information.

In a possible design, the transceiver unit is further configured to send capability information of the terminal, where the capability information includes at least one of the following: information about a capability of the terminal to simultaneously monitor multiple beams, and information about a capability of the terminal to sequentially monitor multiple beams; and the capability information is used by the base station to determine the beam configuration information.

A technical solution provided based on any possible design provided in any one of the foregoing aspects is as follows:
in a possible design, the beam indication information may include at least one of the following information: an index of a beam, an index of an antenna port corresponding to a beam, an index of a reference signal corresponding to a beam, a time index of a downlink synchronization signal block (SS block), beam pair link (BPL) information, and quasi co-location (QCL) information corresponding to a beam.

In another possible design, the beam monitoring information may be used to indicate an offset or a search space. The offset is an offset of a time of monitoring a beam relative to a starting time of a time period within a monitoring time unit. The search space is a set of time-frequency resources, on which a beam is monitored, within a monitoring time unit.

In another possible design, the beam monitoring information may be used to indicate: a rule of monitoring, on each symbol, all beams indicated by the beam indication information; or a rule of monitoring, on each symbol, one of the beams indicated by the beam indication information. Certainly, this application is not limited thereto. For example, the beam monitoring information may be further used to indicate a rule of monitoring multiple beams on one symbol and monitoring one beam on another symbol, or the like.

In another possible design, the beam configuration information further includes a monitoring period of a beam.

In another possible design, the beam configuration information further includes information about association between a scheduling unit and a beam. The scheduling unit may include but is not limited to a subframe, a slot, an absolute time unit, and the like.

This application further provides a computer storage medium, storing a computer program (instruction), where when the program (instruction) runs on a computer, the computer performs the method in any one of the foregoing aspects.

This application further provides a computer program product, where when the computer program product runs on a computer, the computer performs the method in any one of the foregoing aspects.

It may be understood that any one of the foregoing apparatus, computer storage medium, or computer program product is configured to perform the foregoing corresponding method. Therefore, for beneficial effects that can be achieved by the apparatus, computer storage medium, or computer program product, refer to the beneficial effects in the corresponding method. Details are not described herein again.

### BRIEF DESCRIPTION OF DRAWINGS

FIG. 1 is a schematic diagram of a system architecture to which a technical solution provided in an embodiment of this application is applicable;
FIG. 2 is a schematic diagram of a relationship between a monitoring period and a time unit according to an embodiment of this application;
FIG. 3 is a schematic interaction diagram of a communication method according to an embodiment of this application;
FIG. 4 is a schematic diagram of a format of a MAC CE according to an embodiment of this application;
FIG. 5 is a schematic diagram of another format of a MAC CE according to an embodiment of this application;
FIG. 6 is a schematic diagram of another format of a MAC CE according to an embodiment of this application;
FIG. 7 is a schematic diagram of another format of a MAC CE according to an embodiment of this application;
FIG. 8 is a schematic diagram of a search space according to an embodiment of this application;
FIG. 9 is a schematic diagram of another format of a MAC CE according to an embodiment of this application;
FIG. 10 is a schematic structural diagram of a communications apparatus according to an embodiment of this application; and
FIG. 11 is a schematic structural diagram of another communications apparatus according to an embodiment of this application.

### DESCRIPTION OF EMBODIMENTS

Technical solutions provided in this application may be applied to various communications systems using a beam technology, for example, an existing communications system using the beam technology, a 5G communications system, a future evolved system or a system that integrates various types of communication; and may include various application scenarios, for example, machine to machine (M2M), D2M, macro and micro communication, enhanced mobile broadband (eMBB), ultra-reliable and low latency communications (URLLC), and massive machine type communication (mMTC). These scenarios may include but are not limited to a scenario of communication between terminals, a scenario of communication between base stations, a scenario of communication between a base station and a terminal, and the like. The technical solutions provided in embodiments of this application may also be applied to scenarios in a 5G communications system, such as a scenario of communication between terminals, or a scenario of communication between base stations.

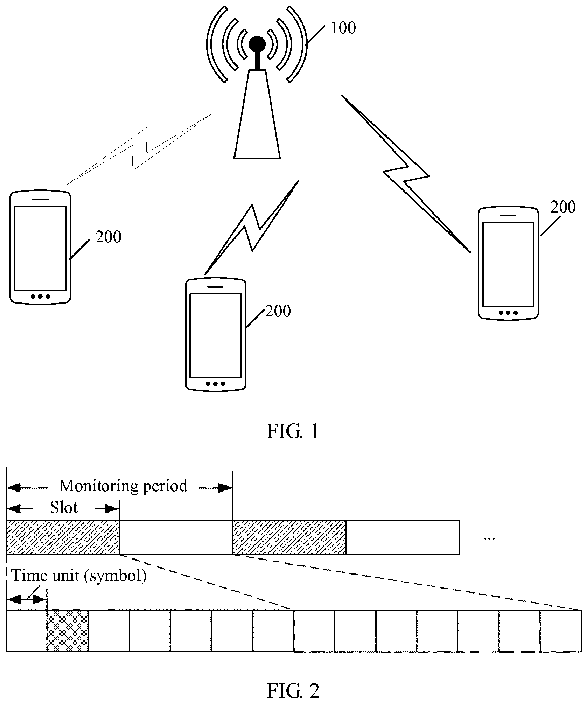

FIG. 1 is a schematic diagram of a communications system. The communications system may include at least one base station 100 (where only one base station 100 is shown) and one or more terminals 200 connected to the base station 100.

The base station 100 may be a device capable of communicating with the terminal 200. The base station 100 may be a relay station, an access point, or the like. The base station 100 may be a base transceiver station (BTS) in a Global System for Mobile Communications (GSM) or a Code Division Multiple Access (CDMA) network, or may be an NB (NodeB) in Wideband Code Division Multiple Access (WCDMA), or may be an eNB or eNodeB (evolved NodeB) in LTE. The base station 100 may alternatively be a wireless controller in a cloud radio access network (CRAN) scenario. The base station 100 may alternatively be a network device in a 5G network or a network device in a future evolved network; or may be a wearable device, an in-vehicle device, or the like.

The terminal 200 may be user equipment (UE), an access terminal, a UE unit, a UE station, a mobile station, a mobile terminal, a remote station, a remote terminal, a mobile device, a UE terminal, a terminal, a wireless communications device, a UE proxy, a UE apparatus, or the like. The access terminal may be a cellular phone, a cordless phone, a Session Initiation Protocol (SIP) phone, a wireless local loop (WLL) station, a personal digital assistant (PDA), a handheld device having a wireless communication function, a computing device, another processing device connected to a wireless modem, an in-vehicle device, a wearable device, a terminal in a future 5G network, a terminal in a future evolved PLMN network, or the like.

Concepts of a beam and a beam pair are introduced in a communications system. A beam is a communication resource. A beam may be a wide beam, a narrow beam, or another type of beam. A technology for forming a beam may be a beamforming technology or another technical mean. The beamforming technology may be specifically a digital beamforming technology, an analog beamforming technology, or a hybrid beamforming technology. Different beams may be considered as different resources. Different beams may be used to send same information or different information. Optionally, multiple beams having same or similar communication features may be considered as one beam. One beam may correspond to one or more antenna ports, and be used to transmit a data channel, a control channel, a sounding signal, and the like. For example, a transmit beam may be distribution of signal strength formed in different directions in space after a signal is transmitted through an antenna. A receive beam may be distribution of signal strength in different directions in space after a radio signal is received from an antenna. It may be understood that one or more antenna ports that form one beam may be considered as an antenna port set. A beam pair is established based on the concept of a beam. A beam pair usually includes one transmit beam of a transmit end device and one receive beam of a receive end device.

Some terms used in this application are described below to facilitate understanding.

### (1) Time unit and monitoring time unit

A time unit is a basic unit of monitoring a beam by a receive end device in time domain. In a downlink direction, the receive end device may be a terminal. In an uplink direction, the receive end device may be a base station. The time unit is, for example, but not limited to, any one of the following: one or more symbols, or an absolute time unit such as millisecond (ms). The "symbol" herein may include but is not limited to any one of the following: an orthogonal frequency division multiplexing (OFDM) symbol, a universal filtered multi-carrier (UFMC) symbol, a filter-band multi-carrier (FBMC) symbol, a generalized frequency-division multiplexing (GFDM) symbol, and the like.

If the receive end device monitors a beam in a time unit, the time unit is a monitoring time unit of the beam. Because the receive end device may monitor one or more beams in one time unit, a same time unit may be used as a monitoring time unit of one or more beams. In addition, the receive end device may monitor a same beam in different time units. Therefore, different time units may be used as a monitoring time unit of a same beam.

The receive end device may periodically monitor a beam or may aperiodically monitor a beam. It needs to be noted that in this application, periodic monitoring may be periodic monitoring within a time period, and aperiodic monitoring may be aperiodic monitoring within a time period. In this application, a value of the time period is not limited. The "time unit" and the "monitoring time unit" may be concepts in a periodic monitoring scenario or may be concepts in an aperiodic monitoring scenario.

### (2) Monitoring period

In a periodic monitoring scenario, a concept of a monitoring period is introduced. The monitoring period is, for example, but not limited to, any one of the following: one or more subframes, one or more slots, one or more mini slots, one or more symbols, an integer multiple of a half of a slot, and an absolute time unit such as ms. One radio frame includes 10 subframes, each subframe has a length of 1 ms, each subframe includes two slots, and each slot is 0.5 ms. A quantity of symbols included in each slot is related to a length of a cyclic prefix (CP) in a subframe. If a CP is a normal CP, each slot includes seven symbols, and each subframe includes 14 symbols. If a CP is an extended CP, each slot includes six symbols, and each subframe includes 12 symbols.

One monitoring period may include N time units, where N is an integer greater than or equal to 1. Generally, for one beam, the receive end device monitors the beam once within one monitoring period. In other words, the receive end device monitors the beam once every N time units. Alternatively, it may be understood that the receive end device monitors the beam once at an interval of N-1 time units, and the beam is monitored within one time unit each time. FIG. 2 is a schematic diagram of a relationship between a monitoring period and a time unit. In FIG. 2, the time unit is a symbol, and the monitoring period includes two slots, 14 symbols in total, namely, 14 time units. In FIG. 2, for one beam, the receive end device monitors the beam once every 14 symbols.

The monitoring period may be represented by, including but not limited to, a duty cycle period or a duty cycle. The duty cycle is used to represent (a time length of monitoring a beam/a duty cycle period)^{∗}100% within one duty cycle period. As shown in FIG. 2, the duty cycle period is two slots, and the duty cycle is 50%, representing that a beam is monitored once every two slots, in other words, the monitoring period is two slots.

### (3) Scheduling unit

In an aperiodic monitoring scenario, a concept of a scheduling unit is introduced. The scheduling unit may include but is not limited to any one of the following: a subframe, a slot, a mini slot, an absolute time unit, and the like. For a specific example, refer to the following description.

### (4) Offset

In some embodiments of this application, a concept of an offset (or a beam offset) is introduced.

In a periodic monitoring scenario, an offset of a beam is an offset of a monitoring time unit of the beam relative to a starting time unit of a monitoring period within the monitoring period. The offset may use, for example, but not limited to, a symbol or an absolute time unit such as 0.1 ms as a basic unit. For example, if an offset of a beam uses a symbol as a basic unit, and the offset = 1, the receive end device monitors the beam at a second symbol in each monitoring period, as shown in FIG 2. For another example, if an offset uses a symbol as a unit, and the offset = 0, the receive end device monitors the beam at a first symbol in each monitoring period. For still another example, if an offset uses an absolute time unit such as 0.1 ms as a unit, and the offset = 1, the receive end device monitors the beam within a second 0.1 ms from the beginning of each monitoring period.

In an aperiodic monitoring scenario, an offset of a beam is an offset of a monitoring time unit of the beam relative to a starting time unit of a scheduling unit within the scheduling unit. The offset may use, for example, but not limited to, a symbol or an absolute time unit such as 0.1 ms as a basic unit. For a specific example, refer to the following description.

### (5) Search space

In some embodiments of this application, a concept of a search space (or a beam search space) is introduced. A search space is a time-frequency resource that may carry a physical downlink control channel (PDCCH) of a terminal. A size of a search space is not limited in this application, and is, for example, but not limited to, one control channel element (CCE). Time-frequency resources occupied by each search space are predetermined or preconfigured by a base station and the terminal.

In a periodic monitoring scenario, a search space of a beam is a set of time-frequency resources, on which the beam is monitored, in time-frequency resources within a monitoring period. For a specific example, refer to the following description.

In an aperiodic monitoring scenario, a search space of a beam is a set of time-frequency resources, on which the beam is monitored, in time-frequency resources in a scheduling unit. For a specific example, refer to the following description.

### (6) Beam indication (Beam Indication) information

Beam indication information is used to indicate a beam. In a downlink direction, a beam indicated by beam indication information may be a receive beam of a terminal. In an uplink direction, a beam indicated by beam indication information may be a transmit beam of the terminal.

Specific content of the beam indication information in this application is not limited, and for example, may include but is not limited to at least one of the following information: an index of a beam, an index of an antenna port corresponding to a beam, an index of a reference signal corresponding to a beam, a time index of a downlink synchronization signal block, BPL information, and quasi co-location information corresponding to a beam.

For example, the beam indication information may be a channel state information-reference signal (CSI-RS) port number corresponding to a beam, an SS block time index, a demodulation reference signal (DMRS) port number, or the like. In this application, none of an index of a beam, an index of an antenna port, and an index of a reference signal are limited. For example, the indexes may be relative indexes or absolute indexes. For example, an index of a beam may be a logic sequence number of the beam, a physical sequence number of the beam, or the like. For example, if time division multiplexing is used between multiple reference signals, an index of a reference signal may be a time index of sending a reference signal. If frequency division multiplexing is used between multiple reference signals, an index of a reference signal may be a frequency index of sending a reference signal or the like.

For example, when the beam indication information is BPL information, a beam may be indicated in a bitmap manner. For example, assuming that N available beam pairs are maintained between a base station and a terminal, N bits may be used to represent the N beam pairs, and a corresponding bit is set to 1 when a beam pair is used, or set to 0 when the beam pair is not used. For example, four available beam pairs that are respectively BPL1, BPL2, BPL3, and BPL4 are maintained between the base station and the terminal. When a beam is indicated in a bitmap manner, if the beam indication information configured by the base station for the terminal is 1010, it represents that beams indicated by the beam indication information are receive beams in BPL1 and BPL3. For example, the terminal may perform monitoring on the receive beams in BPL1 and BPL3.

### (7) Other terms

The term "multiple" in this specification means "two or more".

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects. In a formula, the character "/" represents a "division" relationship between the associated objects.

The technical solutions provided in this application are described below from a perspective of a communication method.

The technical solutions provided in this application may be applied to a scenario in which a base station sends beam configuration information to a terminal so that the terminal receives downlink information sent by the base station, where the downlink information includes downlink control information, downlink data information, and the like. Alternatively, the technical solutions may be applied to a scenario in which a base station sends beam configuration information to a terminal so that the terminal sends uplink information to the base station, where the uplink information includes uplink control information, uplink data information, and the like. An example in which a terminal receives downlink control information sent by a base station is mainly used for description below. The downlink control information is usually carried in a PDCCH.

In an LTE system, a PDCCH is usually transmitted on a first OFDM symbol or the first two or first three OFDM symbols in a subframe. These OFDM symbols may be referred to as control symbols. In the LTE system, a resource element (RE) is a smallest time-frequency resource element. The RE may be uniquely identified by an index pair (k, 1), where k is a subcarrier index, and 1 is a symbol index. Four consecutive REs (where an RE occupied by a reference signal is not calculated) form one resource element group (REG). The REG may be identified by an index pair (k', 1'). During control channel transmission, a basic unit of a time-frequency resource for carrying a control channel is a control channel element (CCE). One CCE includes nine REGs.

A time-frequency resource corresponding to a symbol (where the symbol is usually a first symbol in an LTE system) in which a PDCCH is located may further carry the following information: a reference signal (RS), a physical control format indicator channel (PCFICH), and a physical HARQ indicator channel (PHICH). The HARQ is short for a hybrid automatic repeat request.

The PCFICH carries control format indicator (CFI) information. The CFI information is used to notify user equipment (UE) of a quantity of symbols occupied by a control channel. The CFI information may be used by the UE to calculate a total quantity of resources occupied by a control channel. The CFI information may be further used by the UE to determine a starting position of a data channel in time domain, namely, a symbol from which the data channel starts. The PCFICH is a channel having a broadcast nature. The base station sends the PCFICH on a first symbol in a subframe. A configuration of the PCFICH is notified by using other signaling.

If the terminal sends uplink data, the UE expects the base station to provide a feedback about whether the uplink data is correctly received. The PHICH may be used as a HARQ feedback about the uplink data of the UE. The PHICH is a channel having a multicast nature. The base station may send the PHICH on a first OFDM symbol in a subframe. A configuration of the PHICH is notified by using a master information block (MIB) carried in a physical broadcast channel (PBCH).

A total quantity of REGs corresponding to symbols occupied by a control channel is determined by bandwidth and a quantity of symbols. A result of subtracting a quantity of time-frequency resources occupied by a PCFICH and a PHICH from the total quantity of REGs is a quantity of time-frequency resources that can be used for a PDCCH.

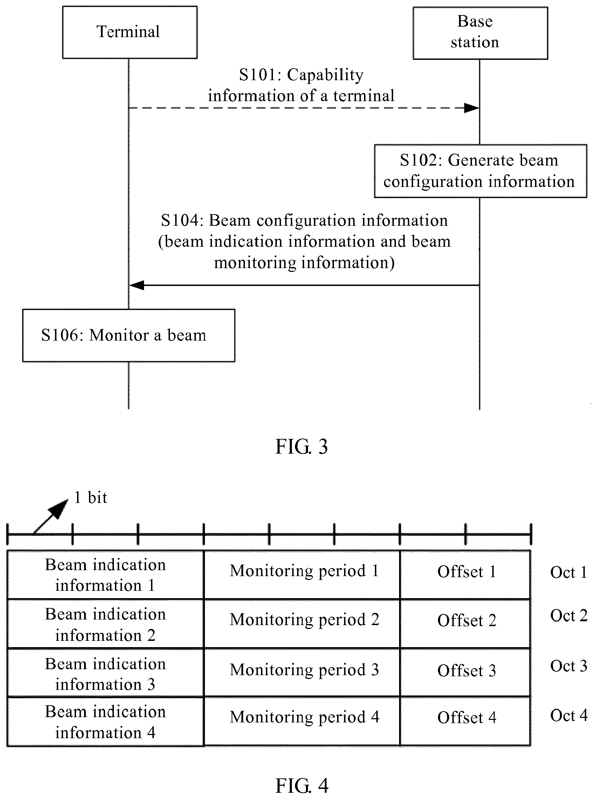

FIG. 3 is a schematic interaction diagram of a communication method provided in this application. The method shown in FIG. 3 is described by using an example in which a base station sends beam configuration information to a terminal so that the terminal monitors a beam based on the beam configuration information to receive downlink information (including downlink control information and/or downlink data information) sent by the base station.

S102: The base station generates beam configuration information, where the beam configuration information includes beam indication information and beam monitoring information.

After the terminal accesses the base station, the base station may generate the beam configuration information based on capability information of the terminal. Alternatively, when determining that beam configuration information currently used by the terminal needs to be updated, the base station may generate new beam configuration information based on capability information of the terminal. How the base station determines whether the beam configuration information currently used by the terminal needs to be updated is not limited in this application. For example, when determining that a channel state of a receive beam currently used by the terminal to perform communication is relatively poor, the base station determines that the beam configuration information currently used by the terminal needs to be updated. Certainly, this application is not limited thereto.

The terminal may generate one or more receive beams, and the beam configuration information may include one or more pieces of beam indication information used to indicate some or all of the one or more receive beams. This application does not pose any restriction on which beam or which beams in the one or more receive beams are used by the base station as beams to be configured in a current beam configuration process. For example, the base station may use multiple beams having relatively low relevance in the multiple receive beams as the beams to be configured in the current beam configuration process; or use one or more beams having relatively high beam quality in the multiple receive beams as the beams to be configured in the current beam configuration process; or use, as the beams to be configured in the current beam configuration process, one or more beams fed back by the terminal. Certainly, this application is not limited thereto.

In an embodiment, the beam monitoring information may be used to indicate an offset. For details, refer to Embodiment 1 below.

In an embodiment, the beam monitoring information may be used to indicate a search space. For details, refer to Embodiment 2 below.

In an embodiment, the beam monitoring information may be used to indicate: a rule of monitoring, on each symbol, all beams indicated by the beam indication information; or a rule of monitoring, on each symbol, one of the beams indicated by the beam indication information. For details, refer to Embodiment 3 below.

In an embodiment, the beam monitoring information may further include a monitoring period of a beam. For details, refer to Embodiments 1 to 3 below.

In an embodiment, the beam monitoring information may further include information about association between a scheduling unit and a beam. For details, refer to Embodiment 4 below.

Before step S102, the method further includes the following step:
S101: The terminal sends capability information of the terminal to the base station, and the base station receives the capability information sent by the terminal.

After the terminal accesses the base station, the terminal may send the capability information of the terminal to the base station. Alternatively, after receiving signaling that is sent by the base station and that is used to instruct the terminal to report the capability information, the terminal may send the capability information of the terminal to the base station. Certainly, this application is not limited thereto. After receiving the capability information of the terminal sent by the terminal, the base station may store the capability information of the terminal, and then generate the beam configuration information based on the stored capability information of the terminal when beam configuration needs to be performed for the terminal. In other words, the terminal does not need to send the capability information of the terminal to the base station each time before beam configuration is performed. In addition, the terminal may send updated capability information to the base station after the capability information of the terminal is updated. After receiving the updated capability information, the base station may update the stored capability information of the terminal.

The capability information of the terminal includes the following:

### (1) Information about a capability of the terminal to simultaneously monitor multiple beams.

The capability information may include: whether the terminal can simultaneously monitor multiple beams, and/or how many beams the terminal can simultaneously monitor, and the like. The capability information may be determined based on, for example, but not limited to, a quantity of radio frequency (RF) links in the terminal. For example, if there is one RF link in the terminal, the capability information may be embodied as that the terminal cannot simultaneously monitor multiple beams. If there are two RF links in the terminal, the capability information may be embodied as that the terminal can simultaneously monitor two beams.

In some embodiments, "simultaneously" herein may be understood as a same time unit. For example, if a time unit is a symbol, "simultaneously" herein may be understood as a same symbol. If a time unit is an absolute time unit, such as 0.1 ms, "simultaneously" herein may represent a same 0.1 ms.

### (2) Information about a capability of the terminal to sequentially monitor multiple beams.

The capability information is beam switching capability of the terminal and the beam switching capability indicates the terminal may implement beam switching on each symbol.

S104: The base station sends the beam configuration information to the terminal, and the terminal receives the beam indication information sent by the base station.

The base station may send the beam configuration information to the terminal by using at least one of MAC signaling, RRC signaling, and DCI. Correspondingly, the terminal may receive the beam configuration information by using at least one of MAC signaling, RRC signaling, and DCI. For a specific implementation, refer to the following description.

S106: The terminal monitors, based on the beam configuration information, a beam indicated by the beam indication information.

In some embodiments of this application, the terminal may preset an effective time window of the beam configuration information according to a protocol or in another manner. In this case, the terminal receives the beam configuration information, starts to monitor a beam still based on current beam configuration information within the effective time window, and configures, after the effective time window, beam monitoring based on the received beam configuration information. Alternatively, the effective time window may be configured by the base station and sent to the terminal by using signaling. The signaling for sending the beam configuration information may be reused as the signaling for sending the effective time window, or the signaling for sending the effective time window may be independent signaling. This is not limited in this application. A specific value of the effective time window is not limited in this application.

In some other embodiments of this application, the terminal may preset a timer according to a protocol or in another manner. In this case, when the terminal receives the beam configuration information, the timer begins timing. Before a timing value of the timer reaches a preset threshold, the terminal monitors a beam still based on current beam configuration information. When the timing value of the timer reaches the preset threshold, the base station configures beam monitoring based on the received beam configuration information. The preset threshold and an initial value of the timer are not limited in this application.

Certainly, this application does not exclude possibility that after receiving the beam configuration information, the terminal immediately monitors, based on the beam configuration information, the beam indicated by the beam indication information.

It needs to be noted that the terminal monitors, based on the beam configuration information, the beam indicated by the beam indication information, to receive downlink information sent by the base station. However, the base station may send the downlink information on some or all of the beams indicated by the beam indication information.

In some embodiments of this application, if the beam configuration information received by the terminal does not match a capability of the terminal, the terminal may monitor, based on the capability information of the terminal, some of the beams indicated by the beam indication information. For example, the beam indication information in the beam configuration information indicates multiple beams, but the terminal cannot simultaneously monitor the multiple beams. The terminal may determine, according to, for example, but not limited to, any one of the following rules, which beams are to be monitored: monitoring a beam having relatively high quality or a beam having a smallest sequence number in the beams indicated by the beam indication information. Certainly, this application is not limited thereto. For another example, the beam indication information in the beam configuration information indicates four beams, but a control channel of the terminal occupies only two symbols. In this case, the terminal may determine, according to, for example, but not limited to, any one of the following rules, which beams are to be monitored: monitoring two beams having relatively small beam sequence numbers or two beams having relatively high quality or the like in the beams indicated by the beam indication information. Certainly, this application is not limited thereto. A rule of selecting some beams from the beams indicated by the beam indication information may be agreed on by the base station and the terminal in advance according to a protocol, or may be sent by the base station to the terminal by using signaling.

In the communication method provided in this embodiment, the base station may configure the beam indication information and the beam monitoring information for the terminal, and the terminal may monitor a beam based on the beam configuration information. Optionally, the beam monitoring information includes an offset or a search space. In this way, the terminal may not monitor each receive beam on each symbol, thereby helping to reduce power consumption of the terminal and saving a resource.

Several embodiments provided in this application are described below by using different content included in the beam configuration information.

### Embodiment 1

Beam configuration information includes beam indication information, monitoring period indication information, and offset indication information. The monitoring period indication information is used to indicate a monitoring period. The monitoring period indication information may include but is not limited to a value of the monitoring period or an index of the monitoring period. The offset indication information is used to indicate an offset. The offset indication information may include but is not limited to a value of the offset or an index of the offset.

In this embodiment, a base station indicates a monitoring period of a beam to a terminal. Certainly, this application is not limited thereto. For example, if the base station and the terminal agree on a monitoring period of a beam in advance or a monitoring period of a beam is configured by using signaling, the beam configuration information may not include the monitoring period indication information of the beam.

In this embodiment, S102 may include but is not limited to the following:
the base station may determine, based on the information about the capability of the terminal to simultaneously monitor multiple beams, a quantity of beams indicated by the beam indication information in the beam configuration information. For example, if there are two RF links in the terminal, the terminal can simultaneously monitor two beams. In this case, the beam configuration information may include two pieces of beam indication information used to indicate two beams. Certainly, the beam configuration information may alternatively include one piece of beam indication information used to indicate one beam.

The base station may determine offsets of multiple beams based on the information about the capability of the terminal to sequentially monitor multiple beams. For example, assuming that a beam switching time of a beam is 10 ns, the terminal may implement beam switching on each symbol. In this case, an offset of the beam may be 0.

In some implementations of this embodiment, the beam configuration information may include multiple pieces of beam indication information, and a monitoring period and an offset of a beam that are indicated by each piece of beam indication information.

For example, if four beams that are respectively beams 1, 2, 3, and 4 are maintained between the base station and the terminal, information included in beam configuration information may be shown in Table 1:

**Table 1**

| Beam indication information | Monitoring period | Offset |
|---|---|---|
| Beam indication 1 | Monitoring period 1 | Offset 1 |
| Beam indication 2 | Monitoring period 2 | Offset 2 |
| Beam indication 3 | Monitoring period 3 | Offset 3 |
| Beam indication 4 | Monitoring period 4 | Offset 4 |

For example, if two beams that are respectively a beam 1 and a beam 3, are maintained between the base station and the terminal, information included in beam configuration information may be shown in Table 2:

**Table 2**

| Beam indication information | Monitoring period | Offset |
|---|---|---|
| Beam indication 1 | Monitoring period 1 | Offset 1 |
| Beam indication 3 | Monitoring period 3 | Offset 3 |

The foregoing is described by using an example in which a maximum of four beams may be maintained between the base station and the terminal. The four beams are receive beams of the terminal. The four beams are respectively beams 1, 2, 3, and 4, and indication information of the four beams is respectively beam indications 1, 2, 3, and 4. Certainly, this application is not limited thereto. If a maximum quantity of beams maintained between the base station and the terminal is not 4, persons skilled in the art should be able to deduce formats of various signaling (including MAC signaling, RRC signaling, DCI, and/or the like) from the following examples.

For example, it is assumed that the information included in the beam configuration information is shown in Table 2, the monitoring period 1 is one slot, the offset 1 is zero symbols, the monitoring period 3 is two slots, and the offset 3 is one symbol. In this case, after receiving the beam configuration information, the terminal may monitor the beam 1 on a first symbol in each slot, and monitor the beam 3 on a second symbol in a (2n)^{th} slot, where n is any integer greater than or equal to 0.

A quantity of bits occupied by the beam indication information may be determined based on, including but not limited to, a maximum quantity of beams (namely, receive beams of the terminal) that can be maintained between the base station and the terminal. Theoretically, if a maximum of four beams can be maintained between the base station and the terminal, and the beam indication information is logic sequence numbers of the beams, the four beams can be represented by using two bits. In other words, the quantity of bits occupied by the beam indication information may be 2. In practice, it is considered that the beam indication information may be further used to indicate other information. The beam indication information is specifically, for example, but not limited to, a CSI-RS port number, an SS block, or the like. Therefore, some more bits may be reserved for the beam indication information. For example, the quantity of bits occupied by the beam indication information may be 3. Certainly, this application is not limited thereto.

A quantity of bits occupied by the offset may be determined based on a symbol occupied by downlink information. An example in which the downlink information is downlink control information is used. In a communications system such as an LTE system, the downlink control information is usually transmitted on a first symbol or the first two or first three symbols in a subframe. Based on this, in some embodiments, a possible value of the offset may be 0, 1, or 2, and the three possible values may be represented by using two bits. Therefore, the following example is described by using an example in which the quantity of bits occupied by the offset is 2. Certainly, this application is not limited thereto. It needs to be noted that when the downlink information is downlink data information, a method for determining the quantity of bits occupied by the offset is similar to this. Details are not described herein again.

Several specific implementations of S104 are described below.

Implementation 1: Send/receive the beam configuration information by using MAC signaling. In this way, dynamic signaling overheads are reduced, a configuration delay is shortened, and robustness is enhanced. The robustness may be embodied as that the terminal needs to perform an operation of feeding back an acknowledgment for the MAC signaling.

A MAC control element (MAC CE) may include: a beam indication region, used to carry beam indication information; a monitoring period indication region, used to carry a monitoring period; and an offset indication region, used to carry an offset.

In some embodiments, if the beam configuration information includes multiple pieces of beam indication information and a monitoring period and an offset of a beam that are indicated by each piece of beam indication information, a format of a MAC CE may be set by using "beam indication information, a monitoring period, and an offset of one beam" as a unit.

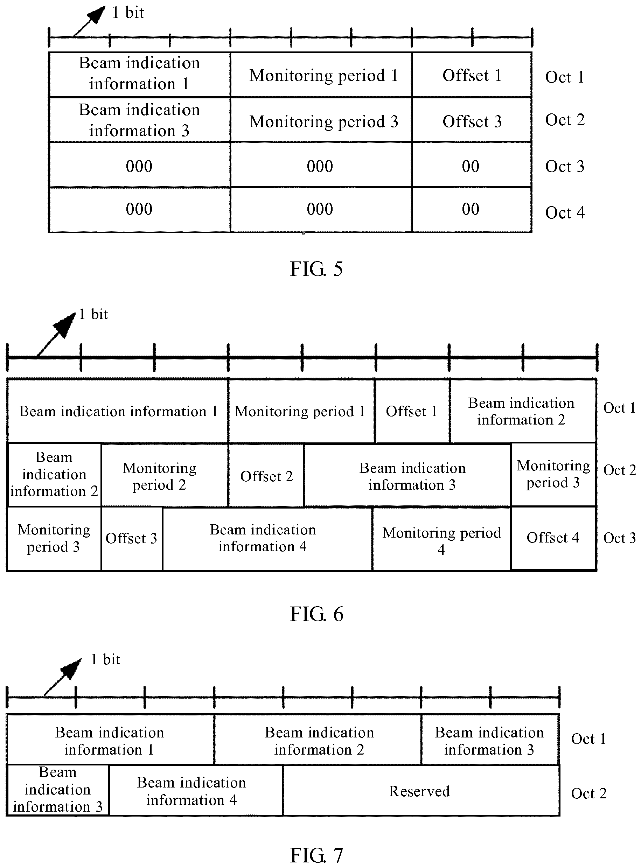

For example, if the beam indication information occupies three bits, the monitoring period occupies three bits, and the offset occupies two bits, for the example shown in Table 1, a format of the MAC CE is shown in FIG. 4. Generally, the MAC CE has a fixed length. Therefore, if a quantity of beams indicated by the beam indication information in the beam configuration information is less than 4, remaining bits in the MAC CE may be padded with 0. Based on this, for the example shown in Table 2, a format of the MAC CE is shown in FIG. 5. Both FIG. 4 and FIG. 5 are described by using an example in which a MAC CE has a fixed length of 32 bits. This application is not limited thereto.

For example, if the beam indication information occupies three bits, the monitoring period occupies two bits, and the offset occupies one bit, for the example shown in Table 1, a format of the MAC CE is shown in FIG. 6. FIG. 6 is described by using an example in which a MAC CE has a fixed length of 24 bits.

In FIG. 4 to FIG. 6, Oct represents one byte, and is a basic unit of a MAC CE in LTE. To be specific, eight bits are used as a unit. Certainly, this application is not limited thereto.

Implementation 2: Send/receive the beam configuration information by using DCI.

For example, if a quantity of bits occupied by the beam indication information is X, a quantity of bits occupied by the monitoring period is Y, and a quantity of bits occupied by the offset is Z, a format of the DCI is shown in Table 3.

**Table 3**

| Field | Bit length |
|---|---|
| Field related to resource allocation | Related to bandwidth |
| Modulation and coding scheme (MCS) | [5], not limited thereto |
| Field related to a hybrid automatic repeat request (HARQ) | [6], not limited thereto |
| Control information related to multi-antenna transmission | Related to a transmission mode |
| Beam indication | [X]^{∗}N |
| Monitoring period | [Y]^{∗}N |
| Offset | [Z]^{∗}N |
| Others | Not limited in this application |

In an example, values of X, Y, and Z may be as follows: X = 3, Y = 3, and Z = 2.

It may be understood that in Table 3, the DCI further includes the field related to resource allocation, the MCS, the field related to a HARQ, the control information related to multi-antenna transmission, and other fields, in addition to the beam indication field, the monitoring period field, and the offset field that are used in this application. Certainly, this application is not limited thereto. For example, the DCI may include one or more of the foregoing fields. In Table 3, N represents a quantity of beams configured in the beam configuration information. For the example shown in Table 1, N = 4. For the example shown in Table 2, N = 2.

Implementation 3: Send/receive the beam configuration information by using RRC signaling.

For example, a format of an RRC information element (RRC IE) is as follows:

```
          -- ASN1START
          Monitor-Config:: = SEQUENCE {
          Beam Indication SEQUENCE {INTEGER (0..32), INTEGER (0..32), INTEGER (0..32),
          INTEGER (0..32) }
             Monitoring Period SEQUENCE {INTEGER (0..140), INTEGER (0..140),
             INTEGER (0..140), INTEGER (0..140) }
             Offset SEQUENCE {INTEGER (0..3), INTEGER (0..3), INTEGER (0.. 3),
             INTEGER (0..3)}
          -- ASN1STOP
```

The example is described by using an example in which a CSI-RS port number is used as the beam indication information. There are usually 32 CSI-RS ports. Therefore, a value of beam indication information of each beam may be any integer from 0 to 31. Certainly, the value of the beam indication information is not limited thereto. In addition, the example is described by using an example in which a maximum value of the monitoring period is 20, namely, 140 symbols. Therefore, a monitoring period of each beam may be any value from 0 to 139. For description of a value of the offset, refer to the foregoing description. Details are not described herein again.

It may be understood that the values of the beam indication, the monitoring period, and the offset are not limited to the foregoing examples.

Implementation 4: Send/receive the beam configuration information by using RRC signaling and MAC signaling.

In this manner, the base station may configure beam configuration information of multiple beams for the terminal by using RRC signaling, where beam configuration information of each beam includes beam indication information, a monitoring period, and an offset of the beam. Beam indication information of one or more beams in the beam configuration information of the multiple beams is then activated by using MAC signaling. In this way, signaling overheads of dynamic indication can be reduced.

For example, the base station may configure, for the terminal by using RRC signaling, beam configuration information of the four beams shown in Table 1, and then activate beam indication information of the beams 1 and 3 in the four beams by using MAC signaling. In this way, after receiving the RRC signaling, the terminal may store the beam configuration information of the four beams, and then may determine, after receiving the MAC signaling, other configuration information of the beams 1 and 3 based on the two pieces of beam indication information in the MAC signaling.

For an implementation in which the base station configures the beam configuration information of the multiple beams for the terminal by using the RRC signaling, refer to the foregoing description. When the base station indicates the beam indication information of one or more beams in the beam configuration information of the multiple beams by using the MAC signaling, an implementation of the MAC signaling may be shown in FIG. 7. FIG. 7 is described by using an example in which each beam indication occupies three bits, four beams are maintained between the base station and the terminal, and the MAC signaling has a fixed length of 16 bits. A reserved bit in FIG. 7 may not carry information, or may carry other information. This is not limited in this application.

For example, in this manner, a format of an RRC IE may be as follows:

```
          -- ASN1 START
          Monitor-Config:: = SEQUENCE {
             MonitorID INTEGER (0..3)
          BeamIndication INTEGER (0..32)
             Monitoring Period INTEGER (0..140)
             Offset INTEGER (0..3)
          }
          -- ASN1STOP
```

For explanation of related content in this example, refer to the foregoing description. It needs to be noted that, in the foregoing example, the beam indication information may be any value from 0 to 31, and therefore the beam indication information needs five bits. To reduce signaling overheads, a parameter, namely, a monitor ID, is introduced in this example. The monitor ID is a logic reference. A monitor ID may be used to indicate a CSI-RS port number corresponding to a beam. In this way, the beam indication information carried in the MAC signaling may be the monitor ID. Certainly, a value of the monitor ID is not limited thereto.

Implementation 5: Send/receive the beam configuration information by using RRC signaling and DCI. In this way, signaling overheads of dynamic indication can be reduced.

In this manner, the base station may configure beam configuration information of multiple beams for the terminal by using RRC signaling, and then activate beam indication information of one or more beams in the beam configuration information of the multiple beams by using DCI. In this manner, for a format of an RRC IE, refer to the foregoing manner 4. In this case, the beam indication information carried in the DCI may be a monitor ID.

It is not difficult to understand that, when the base station activates the beam indication information of one or more beams by using the DCI, an implementation of the DCI may be shown in Table 4:

**Table 4**

| Field | Bit length |
|---|---|
| Field related to resource allocation | Related to bandwidth |
| MCS | [5], not limited thereto |
| Field related to a HARQ | [6], not limited thereto |
| Control information related to multi-antenna transmission | Related to a transmission mode |
| Beam indication | [X]^{∗}N |
| Others | Not limited in this application |

For explanation of related content in Table 4, refer to the foregoing description. Details are not described herein again.

Implementation 6: Send/receive the beam configuration information by using MAC signaling and DCI. In this way, signaling overheads of dynamic indication can be reduced.

In this manner, the base station may configure beam configuration information of multiple beams for the terminal by using MAC signaling, and then activate beam indication information of one or more beams in the beam configuration information of the multiple beams by using DCI. A specific example may be deduced based on an example in Implementation 4. Details are not described herein again.

Implementation 7: Send/receive the beam configuration information by using RRC signaling, MAC signaling, and DCI.

In this manner, the base station may configure beam configuration information of multiple beams for the terminal by using RRC signaling, and then activate a subset of the beam configuration information of the multiple beams by using MAC signaling, where the subset may include beam configuration information of some or all beams in the beam configuration information of the multiple beams that is configured in the RRC signaling; and next, activate beam configuration information of one or more beams in the subset by using DCI.

In this manner, the base station may configure beam indication information of multiple beams and a monitoring period of each beam by using RRC signaling, and then activate one or more pieces of indication information of the multiple beams by using MAC signaling, or activate one or more of monitoring periods of the multiple beams, and next, configure, by using DCI, an offset of a beam corresponding to the activated indication information or the activated monitoring period.

The foregoing manners are only examples. This application is not limited thereto.

### Embodiment 2

Beam configuration information includes beam indication information, monitoring period indication information, and search space indication information. The search space indication information is used to indicate a search space, and may be an index of the search space, a time domain index of the search space, or the like. This embodiment is applicable to a scenario in which a base station sends beam configuration information to a terminal so that the terminal monitors downlink control information based on the beam configuration information.

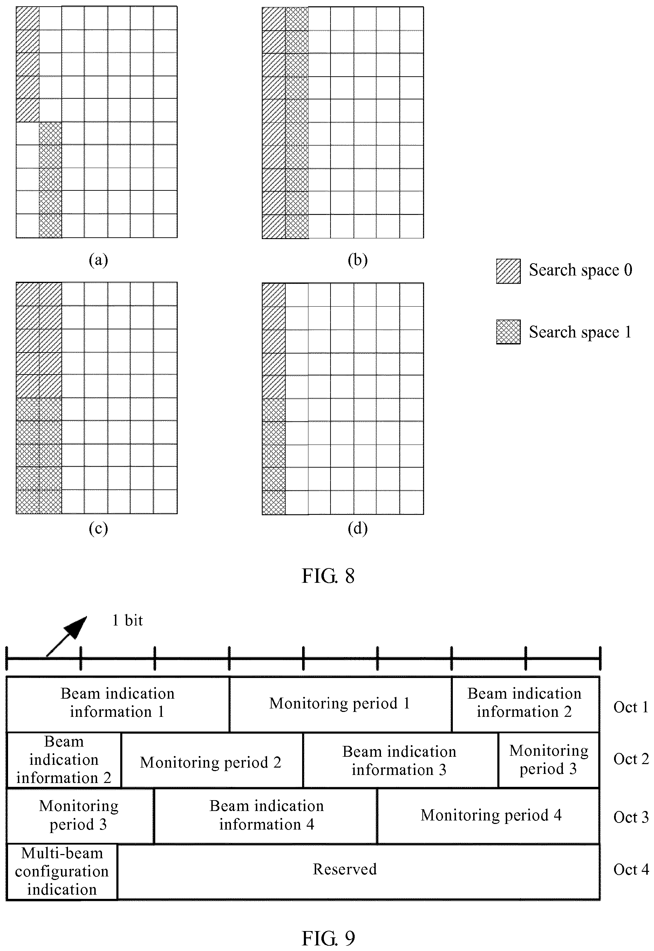

For example, two search spaces are respectively a search space 0 and a search space 1. Time-frequency resources occupied by the two search spaces include but are not limited to several manners shown by (a) to (d) in FIG. 8. Certainly, this application is not limited thereto. Resource mapping is performed, based on a search space, on downlink control information sent by the base station to the terminal. Each small square in FIG. 8 represents an RE, and each shadowed small square represents an RE occupied by a search space.

In some implementations of this embodiment, the beam configuration information may include multiple pieces of beam indication information, and a monitoring period and a search space of a beam that are indicated by each piece of beam indication information.

For example, if two beams that are respectively a beam 1 and a beam 3 are maintained between the base station and the terminal, information included in beam configuration information may be shown in Table 5:

**Table 5**

| Beam indication information | Monitoring period | Search space |
|---|---|---|
| Beam indication 1 | Monitoring period 1 | Search space 0 |
| Beam indication 3 | Monitoring period 3 | Search space 1 |

Assuming that the monitoring period 1 of the beam 1 is one slot and a search space is 0, the terminal monitors the beam 1 on the search space 0 of each slot. Assuming that the monitoring period 3 of the beam 3 is one slot and a search space is 1, the terminal monitors the beam 3 on the search space 1 of each slot.

### Embodiment 3

Beam configuration information includes beam indication information, monitoring period indication information, and multi-beam configuration indication information. It may be understood that the multi-beam configuration indication information is used to indicate a monitoring rule of a terminal when monitoring periods of multiple beams overlap. For example, assuming that a monitoring period of a beam 1 is one slot and a monitoring period of a beam 2 is two slots, for every two slots, the terminal monitors both beams in one slot. However, specifically how to perform monitoring is a technical problem to be resolved in this embodiment.

It needs to be noted that this embodiment is mainly about the monitoring rule of the terminal when the monitoring periods of the multiple beams overlap. When duty cycles of the multiple beams do not overlap, a beam may be monitored on each symbol in a monitoring period to which a monitoring time unit belongs or on each symbol in which downlink control information/downlink data may be transmitted. For example, assuming that the monitoring period of the beam 1 is one slot and the monitoring period of the beam 2 is two slots, the beam 1 may be monitored in a (2n+1)^{th} slot. In this case, the beam 1 may be monitored on each symbol in the (2n+1)^{th} slot or on each symbol in which downlink control information/downlink data may be transmitted, where n is an integer greater than or equal to 0.

The multi-beam configuration indication information may indicate any one of the following rules: monitoring, on each symbol, all beams indicated by the beam indication information; and monitoring, on each symbol, one of the beams indicated by the beam indication information. Alternatively, the multi-beam configuration indication information may indicate any one of the following rules: monitoring one beam on some symbols, and monitoring multiple beams on other symbols; or monitoring multiple beams on each symbol. Certainly, this application is not limited thereto. "Each symbol" herein may be each symbol in a basic unit (namely, a basic unit of a monitoring period) of monitoring a beam in a monitoring period, or each symbol in which downlink control information may be transmitted in a basic unit of monitoring a beam in a monitoring period, or the like. For example, assuming that the basic unit of the monitoring period is a slot and the monitoring period of the beam 1 is one slot, the beam 1 is monitored on each symbol in each slot.

The rule indicated by the multi-beam configuration indication information may be preset, or may be notified by a base station to the terminal by using signaling. This is not limited in this application.

A quantity of bits occupied by the multi-beam configuration indication information is not limited in this application. If the quantity of bits in the multi-beam configuration indication information is M, the multi-beam configuration indication information may indicate a maximum of 2M possible rules, where M is an integer greater than or equal to 1. For example, when M = 2, and four beams that are respectively beams 1, 2, 3, and 4 are maintained between the base station and the terminal, the multi-beam configuration indication information may indicate any one of the following rules:
Rule 1: Simultaneously monitor all beams indicated by the beam indication information on each symbol.
Rule 2: Monitor one of the beams indicated by the beam indication information on each symbol in an order. For example, the beam 1 is monitored on a first symbol, the beam 2 is monitored on a second symbol, the beam 3 is monitored on a third symbol, and the beam 4 is monitored on a fourth symbol. Certainly, this application is not limited thereto.
Rule 3: Monitor the beams 1 and 2 on a first symbol, and monitor the beams 3 and 4 on a second symbol.
Rule 4: Monitor the beams 1 and 3 on a first symbol, and monitor the beams 2 and 4 on a second symbol.

The foregoing rules 1 to 4 are only examples. This application is not limited thereto.

In some embodiments, the beam configuration information may include multi-beam configuration indication information, multiple pieces of beam indication information, and a monitoring period of a beam indicated by each piece of beam indication information.

Several specific implementations of S104 are described below.

Implementation 1: Send/receive the beam configuration information by using MAC signaling.

The MAC signaling may include a beam indication region, a monitoring period indication region, and a multi-beam configuration indication region. The multi-beam configuration indication region is used to carry multi-beam configuration indication information.

In some embodiments, if the beam configuration information includes multiple pieces of beam indication information and a monitoring period of a beam indicated by each piece of beam indication information, a format of the MAC signaling may be configured by using "beam indication information and a monitoring period of one beam" as a unit, and then the multi-beam configuration indication information is configured. Alternatively, the multi-beam configuration indication information may be configured first, and then configuration is performed by using "beam indication information and a monitoring period of one beam" as a unit.

For example, if the beam indication information occupies three bits, the monitoring period occupies three bits, and the multi-beam configuration indication information occupies one bit, for the example shown in Table 1, a format of the MAC signaling is shown in FIG. 9. A reserved bit in FIG. 9 may not carry information, or may carry other information. This is not limited in this application. For explanation of other content in FIG. 9, refer to the foregoing explanation of FIG. 4. Details are not described herein again.

Implementation 2: Send/receive the beam configuration information by using DCI.

For example, if a quantity of bits occupied by the beam indication information is X, a quantity of bits occupied by the monitoring period is Y, and the quantity of bits occupied by the multi-beam configuration indication information is W, a format of the DCI is shown in Table 6.

**Table 6**

| Field | Bit length |
|---|---|
| Field related to resource allocation | Related to bandwidth |
| MCS | [5], not limited thereto |
| HARQ | [6], not limited thereto |
| Control information related to multi-antenna transmission | Related to a transmission mode |
| Beam indication | [X]^{∗}N |
| Monitoring period | [Y]^{∗}N |
| Multi-beam config | [W] |
| Others | Not limited in this application |

In an example, values of X, Y, and W may be as follows: X = 3, Y = 3, and W = 1. For explanation of related content in Table 5, refer to the foregoing description of Table 3. Details are not described herein again.

Implementation 3: Send/receive the beam configuration information by using RRC signaling.

For example, if the beam indication information occupies X bits, the monitoring period occupies Y bits, and an offset occupies W bits, a format of an RRC IE is as follows:

```
          - ASN1START
          Monitor-Config:: = SEQUENCE {
          BeamIndication SEQUENCE {INTEGER (0..32), INTEGER (0..32), INTEGER (0..32),
          INTEGER (0..32) }
          Monitoring Period SEQUENCE {INTEGER (0..140), INTEGER (0..140),
          INTEGER (0..140), INTEGER (0..140) }
          Multi-beam config INTEGER (0,1)
          }
          -- ASN1STOP
```

For explanation of related content in this manner, refer to the related explanation of Implementation 3 in Embodiment 1. Details are not described herein again. In addition, other implementations of S104 in this application are similar to Implementation 4 to Implementation 6 and the first optional manner of Implementation 7 in Embodiment 1, and a difference lies in that: In this embodiment, an offset is not included, but multi-beam configuration indication information is included. The second optional manner of Implementation 7 in Embodiment 1 may be as follows in this embodiment: The base station configures beam indication information of multiple beams and a monitoring period of each beam by using RRC signaling, and then activates one or more pieces of beam indication information in indication information of the multiple beams by using MAC signaling, or activates one or more of monitoring periods of the multiple beams, and next, configures the multi-beam configuration indication information by using DCI. Certainly, this application is not limited thereto.

The foregoing Embodiments 1 to 3 are described by using an example in which the technical solutions provided in this application are applied to a periodic monitoring scenario. An example in which the technical solutions provided in this application are applied to an aperiodic monitoring scenario is described below by using Embodiment 4.

### Embodiment 4

Beam configuration information includes beam indication information, information about association between a scheduling unit and a beam, and offset indication information. Alternatively, beam configuration information includes beam indication information, information about association between a scheduling unit and a beam, and search space indication information.

In some implementations of this embodiment, the beam configuration information may include multiple pieces of beam indication information, an association relationship between each scheduling unit and each beam, and offset/search space indication information of each beam.

A specific implementation form of the beam configuration information is not limited in this application. For example, it is assumed that a scheduling unit is a slot, an offset is a symbol, and a form of the beam configuration information is (1, 1, 1, 1, 2, 1, 1, 1, 1, 2), where "1" represents beam indication information of a beam 1, "2" represents beam indication information of a beam 2, and (1, 1, 1, 1, 2, 1, 1, 1, 1, 2) represents that the beam 1 is monitored in a first slot, a second slot, a third slot, a fourth slot, a sixth slot, a seventh slot, an eighth slot, and a ninth slot. Symbols/search spaces that are in these slots and on which the beam 1 is monitored may be determined based on the offset indication information/search space indication information. For a specific example of the determining, refer to the foregoing description. The beam 2 is monitored on a fifth slot and a tenth slot, and symbols/search spaces that are in these slots and on which the beam 2 is monitored may be determined based on the offset indication information/search space indication information. This example is described by using an example in which beams are monitored on multiple consecutive scheduling units and one beam is monitored in each scheduling unit. This application is not limited thereto. For example, alternatively, beams may be monitored on multiple nonconsecutive scheduling units, or multiple beams may be monitored on any scheduling unit.

In some implementations of this embodiment, the information about the association between a scheduling unit and a beam may be represented by using a duty cycle period and a duty cycle. For example, the beam configuration information (1, 1, 1, 1, 2, 1, 1, 1, 1, 2) may be represented in the following manner: For the beam 1, a duty cycle period is 10 slots, and a duty cycle is 80%; and for the beam 2, a duty cycle period is 10 slots, and a duty cycle is 20%. It may be understood that, at a duty cycle, how a receive end device determines a slot in which a beam is monitored may be preset, or may be notified by using signaling. This is not limited in this application.

The following describes an embodiment in which the communication method provided in this application is applied to a scenario in which a base station sends beam configuration information to a terminal so that the terminal sends uplink information (including uplink control information and/or uplink data information) based on the beam configuration information and by using a beam. Any embodiment provided in the foregoing description may be applied to a scenario in which the terminal sends uplink information. However, the scenario in which the terminal sends uplink information is different from a scenario in which the terminal receives downlink information, and specific differences are described below.

First, capability information of the terminal may include but is not limited to a capability of the terminal to simultaneously send uplink information by using multiple beams, and/or a capability of the terminal to sequentially send uplink information by using multiple beams. The capability of the terminal to simultaneously send uplink information by using multiple beams may be the same as or different from the capability of the terminal to simultaneously monitor multiple beams. This is not limited in this application. The capability of the terminal to sequentially send uplink information by using multiple beams may be the same as or different from the capability of the terminal to sequentially monitor multiple beams. This is not limited in this application.

Second, the terminal sends uplink information to the base station based on the beam configuration information. In the scenario in which the terminal receives downlink information, the terminal monitors a beam based on the beam configuration information.

Third, a quantity, obtained by the base station, of bits occupied by the offset is determined based on a symbol occupied by the uplink information.

Fourth, a beam maintained between the base station and the terminal is a transmit beam of the terminal. A beam indicated by the beam indication information is a transmit beam of the terminal.

Fifth, for information included in the beam indication information, refer to Embodiments 1, 3, and 4. For example, it is assumed that the beam configuration information is shown in Table 2, a monitoring period 1 is one slot, an offset 1 is zero symbols, the monitoring period 3 is two slots, and the offset 3 is one symbol. In this case, after receiving the beam configuration information, the terminal may send uplink information on a first symbol in each slot by using a beam 1, and send uplink information on a second symbol in a (2n)^{th} slot by using a beam 3. Other examples are not listed one by one.

The solutions provided in the embodiments of this application are described above mainly from a perspective of interaction among network elements. It may be understood that, to implement the foregoing functions, each network element such as the base station or the terminal includes corresponding hardware structures and/or software modules that execute various functions. Persons skilled in the art should easily be aware that, in combination with the examples described in the embodiments disclosed in this specification, units and algorithms steps may be implemented by hardware or a combination of hardware and computer software. Whether a function is executed by hardware or hardware driven by computer software depends on particular applications and design constraints of the technical solutions. Persons skilled in the art may use different methods to implement the described functions for each particular application, but it should not be considered that the implementation goes beyond the scope of this application.

In the embodiments of this application, division of functional modules may be performed for the base station or the terminal based on the foregoing method examples. For example, the functional modules may be divided by corresponding functions, or two or more functions may be integrated in one processing module. The integrated module may be implemented in a form of hardware, or may be implemented in a form of a software functional module. It needs to be noted that the division of the modules in the embodiments of this application is an example, and is merely logical function division, and other division manners may be used during actual implementation. An example in which functional modules are divided by corresponding functions is used for description below.

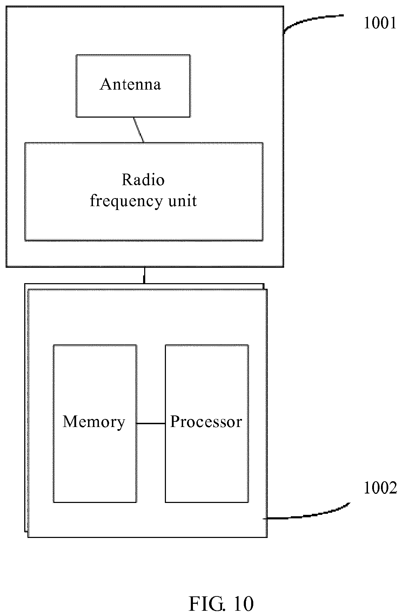

An embodiment of this application further provides an information transmission apparatus. The information transmission apparatus is a base station. FIG. 10 is a simplified schematic structural diagram of the base station. The base station includes a portion 1001 and a portion 1002. The portion 1001 is mainly configured to receive and send a radio frequency signal, and perform conversion between a radio frequency signal and a baseband signal. The portion 1002 is mainly configured to perform baseband processing, control of the base station, and the like. The portion 1001 may be usually referred to as a transceiver unit, a transceiver device, a transceiver circuit, a transceiver, or the like. The portion 1002 is usually a control center of the base station, may be usually referred to as a processing unit, and is configured to control the base station to perform the steps performed by the base station in FIG. 3. For details, refer to the foregoing description of related portions.

The transceiver unit of the portion 1001 may also be referred to as a transceiver device, a transceiver, or the like, and includes an antenna and a radio frequency unit. The radio frequency unit is mainly configured to perform radio frequency processing. Optionally, in the portion 1001, a device configured to implement a receiving function may be considered as a receiving unit, and a device configured to implement a sending function may be considered as a sending unit. In other words, the portion 1001 includes a receiving unit and a sending unit. The receiving unit may also be referred to as a receiver device, a receiver, a receiving circuit, or the like. The sending unit may be referred to as a transmitter device, a transmitter, a transmitting circuit, or the like.

The portion 1002 may include one or more boards. Each board may include one or more processors and one or more memories. The processor is configured to read and execute a program in the memory to implement a baseband processing function and control of the base station. If there are a plurality of boards, the boards may be interconnected with each other to enhance a processing capability. In an optional implementation, the plurality of boards may share one or more processors, or the plurality of boards may share one or more memories, or the plurality of boards share one or more processors and one or more memories.

For example, in an implementation, the processing unit is configured to generate beam configuration information, where the beam configuration information includes beam indication information and beam monitoring information. The sending unit is configured to send the beam configuration information to a terminal.

In an implementation, the receiving unit may be configured to receive a request message sent by the terminal, where the request message is used to request the beam configuration information.

In an implementation, the receiving unit may be configured to receive capability information sent by the terminal, where the capability information includes at least one of the following: information about a capability of the terminal to simultaneously monitor multiple beams, and information about a capability of the terminal to sequentially monitor multiple beams. In this case, the processing unit may be specifically configured to generate the beam configuration information based on the capability information of the terminal.

In an implementation, the sending unit may be specifically configured to send the beam configuration information to the terminal by using at least one of RRC signaling, MAC signaling, and DCI.

For description of related information such as the beam indication information and the beam monitoring information, refer to the foregoing description. Details are not described herein again.

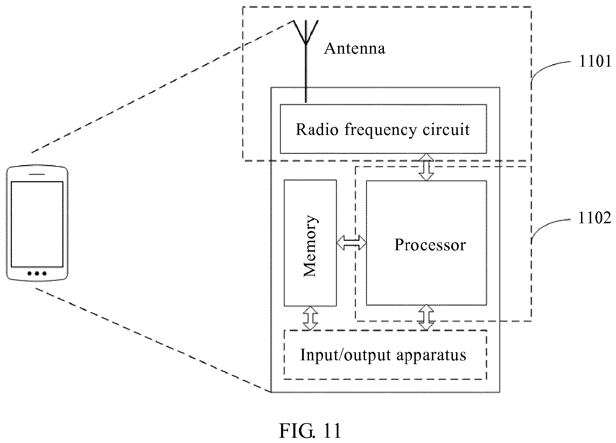

An embodiment of this application further provides an information transmission apparatus. The information transmission apparatus is a terminal. The terminal may be configured to perform the steps performed by the terminal in FIG. 3. FIG. 11 is a simplified schematic structural diagram of the terminal. For ease of understanding and illustration, in FIG. 11, a mobile phone is used as an example of the terminal. As shown in FIG. 11, the terminal includes a processor, a memory, a radio frequency circuit, an antenna, and an input/output apparatus. The processor is mainly configured to: process a communications protocol and communication data, control the terminal, execute a software program, process data of the software program, and the like. The memory is mainly configured to store data and the software program. The radio frequency circuit is mainly configured to perform conversion between a baseband signal and a radio frequency signal and process the radio frequency signal. The antenna is mainly configured to receive and transmit a radio frequency signal in a form of an electromagnetic wave. The input/output apparatus, such as a touchscreen, a display screen, or a keyboard, is mainly configured to receive data input by a user and output data to the user. It needs to be noted that some types of terminals may not have the input/output apparatus.

When data needs to be sent, the processor performs baseband processing on the to-be-sent data and then outputs a baseband signal to the radio frequency circuit. The radio frequency circuit performs radio frequency processing on the baseband signal and then sends a radio frequency signal in a form of an electromagnetic wave by using the antenna. When data is sent to the terminal, the radio frequency circuit receives a radio frequency signal by using the antenna, converts the radio frequency signal into a baseband signal, and outputs the baseband signal to the processor. The processor converts the baseband signal into data and processes the data. For ease of description, FIG. 11 shows only one memory and one processor. In an actual terminal product, one or more processors and one or more memories may exist. The memory may also be referred to as a storage medium, a storage device, or the like. The memory may be disposed independently of the processor, or may be integrated with the processor. This is not limited in this embodiment of this application.

In this embodiment of this application, the antenna having receiving and sending functions and the radio frequency circuit may be considered as a transceiver unit of the terminal, and the processor having a processing function is considered as a processing unit of the terminal. As shown in FIG. 11, the terminal includes a transceiver unit 1101 and a processing unit 1102. The transceiver unit may also be referred to as a transceiver, a transceiver device, a transceiver apparatus, or the like. The processing unit may also be referred to as a processor, a processing board, a processing module, a processing apparatus, or the like. Optionally, a device, configured to implement a receiving function, in the transceiver unit 1101 may be considered as a receiving unit, and a device, configured to implement a sending function, in the transceiver unit 1101 may be considered as a sending unit. In other words, the transceiver unit 1101 includes a receiving unit and a sending unit. Sometimes the transceiver unit may also be referred to as a transceiver device, a transceiver, a transceiver circuit, or the like. Sometimes the receiving unit may also be referred to as a receiver device, a receiver, a receiving circuit, or the like. Sometimes the sending unit may also be referred to as a transmitter device, a transmitter, a transmitting circuit, or the like.

For example, in an implementation, the transceiver unit 1101 is configured to: receive beam configuration information sent by a base station, where the beam configuration information includes beam indication information and beam monitoring information; and then communicate with the base station based on the beam configuration information. The transceiver unit may include a sending unit and a receiving unit.

In an implementation, the sending unit may be configured to send a request message, where the request message is used to request the beam configuration information.

In an implementation, the sending unit may be configured to send capability information of the terminal, where the capability information may include at least one of the following: information about a capability of the terminal to simultaneously monitor multiple beams, and information about a capability of the terminal to sequentially monitor multiple beams; and the capability information is used by the base station to determine the beam configuration information.

In an implementation, the receiving unit may be specifically configured to receive, by using at least one of RRC signaling, MAC signaling, and DCI, the beam configuration information sent by the base station.

In an implementation, the transceiver unit 1101 may be specifically configured to: after the beam configuration information takes effect, communicate with the base station based on the beam configuration information.

In an implementation, the transceiver unit 1101 may be specifically configured to communicate with the base station based on some of beams indicated by the beam indication information.

For explanation of related content and beneficial effects of any one of the foregoing provided communications apparatuses, refer to the corresponding method embodiments provided in the foregoing description. Details are not described herein again.

The foregoing embodiments may be implemented all or partially by using software, hardware, firmware, or any combination thereof. When the embodiments are implemented by using a software program, the embodiments may be implemented all or partially in a form of a computer program product. The computer program product includes one or more computer instructions. When the computer program instructions are loaded and executed on the computer, the processes or functions described based on the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

Although this application is described with reference to the embodiments, in a process of implementing this application that claims protection, persons skilled in the art may understand and implement another variation of the disclosed embodiments by viewing the accompanying drawings, disclosed content, and the accompanying claims. In the claims, "comprising" does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, obviously, various modifications and combinations may be made to these embodiments without departing from the scope of this application. Correspondingly, this specification and the accompanying drawings are merely examples of description of this application defined by the accompanying claims, and are considered as having covered any of or all modifications, variations, combinations within the scope of this application, which is defined by the appended claims. Obviously, persons skilled in the art may make various modifications and variations to this application without departing from the scope of this application. Therefore, this application is intended to cover these modifications and variations of this application, provided that they fall within the scope of protection defined by the following claims.

## Claims

1. A communication method, **characterized by** comprising:
receiving (S101), by a base station, capability information from a terminal, wherein the capability information comprises: information about a capability of the terminal to sequentially monitor multiple beams;
wherein the capability of the terminal to sequentially monitor multiple beams is beam switching capability of the terminal, and the beam switching capability indicates the terminal can implement beam switching on each symbol;
generating (S102), by the base station, beam configuration information based on the capability information of the terminal, wherein the beam configuration information comprises beam indication information and beam monitoring information; and
sending (S104), by the base station, the beam configuration information to the terminal.

2. The method according to claim 1, wherein the beam monitoring information indicates:
an offset, wherein the offset is an offset of a monitoring time unit relative to a starting time unit of a monitoring period within the monitoring period; and/or
a search space, wherein the search space is a set of time-frequency resources, on which a beam is monitored, in time-frequency resources within the monitoring period.

3. The method according to claim 1, wherein the beam monitoring information indicates:
monitoring, on each symbol, all beams indicated by the beam indication information; or
monitoring, on each symbol, one or some of beams indicated by the beam indication information.

4. The method according to any one of claims 1 to 3, wherein the beam configuration information further comprises a monitoring period of a beam.

5. The method according to any one of claims 1 to 4, wherein the beam indication information comprises one or more pieces of the following information: an index of a beam, an index of an antenna port corresponding to a beam, an index of a reference signal corresponding to a beam, a time index of a downlink
synchronization signal block, beam pair link, BPL, information, or quasi co-location, QCL, information corresponding to a beam.

6. A communication method, **characterized by** comprising:
sending (S101), by a terminal, capability information of the terminal to a base station, wherein the capability information comprises: information about a capability of the terminal to sequentially monitor multiple beams; and the capability information is usable for the base station to determine beam configuration information;
wherein the capability of the terminal to sequentially monitor multiple beams is beam switching capability of the terminal, the beam switching capability indicates the terminal can implement beam switching on each symbol;
receiving (S 104), by the terminal, the beam configuration information from the base station, wherein the beam configuration information comprises beam indication information and beam monitoring information; and
communicating, by the terminal, with the base station based on the beam configuration information.

7. The method according to claim 6, wherein the beam monitoring information indicates:
an offset, wherein the offset is an offset of a monitoring time unit relative to a starting time unit of a monitoring period within the monitoring period; and/or
a search space, wherein the search space is a set of time-frequency resources, on which a beam is monitored, in time-frequency resources within the monitoring period.

8. The method according to claim 6, wherein the beam monitoring information indicates: monitoring, on each symbol, all beams indicated by the beam indication information; or
monitoring, on each symbol, one or some of beams indicated by the beam indication information.

9. The method according to any one of claims 6 to 8, wherein the beam configuration information further comprises a monitoring period of a beam.

10. The method according to any one of claims 6 to 9, wherein the beam indication information comprises one or more pieces of the following information: an index of a beam, an index of an antenna port corresponding to a beam, an index of a reference signal corresponding to a beam, a time index of a downlink synchronization signal block, beam pair link, BPL, information, or quasi co-location, QCL, information corresponding to a beam.

11. A base station, configured to perform the method according to any one of claims 1 to 5.

12. A terminal, configured to perform the method according to any one of claims 6 to 10.

13. A computer storage medium, configured to store a computer program, wherein when the computer program is executed by a base station, it causes the base station to perform the method according to any one of claims 1 to 5.

14. A computer storage medium, configured to store a computer program, wherein when the computer program is executed by a terminal, it causes the terminal to perform the method according to any one of claims 6 to 10.

15. A computer program product, wherein when the computer program product is executed by a base station, it causes the base station to perform the method according to any one of claims 1 to 5 or
when the computer program product is executed by a terminal, it causes the terminal to perform the method according to any one of claims 6 to 10.

## Patentansprüche

1. Kommunikationsverfahren, **dadurch gekennzeichnet, dass** es Folgendes umfasst:
Empfangen (S101) von Fähigkeitsinformationen durch eine Basisstation von einem Endgerät, wobei die Fähigkeitsinformationen Folgendes umfassen: Informationen über eine Fähigkeit des Endgeräts zum sequenziellen Überwachen mehrerer Strahlen;
wobei die Fähigkeit des Endgeräts zum sequenziellen Überwachen mehrerer Strahlen eine Strahlumschaltfähigkeit des Endgeräts ist und die Strahlumschaltfähigkeit anzeigt, dass das Endgerät eine Strahlumschaltung in jedem Symbol implementieren kann;
Generieren (S102) von Strahlkonfigurationsinformationen basierend auf den Fähigkeitsinformationen des Endgeräts durch die Basisstation, wobei die Strahlkonfigurationsinformationen Strahlanzeige-Informationen und Strahlüberwachungsinformationen umfassen; und
Senden (S104) der Strahlkonfigurationsinformationen durch die Basisstation an das Endgerät.

2. Verfahren nach Anspruch 1, wobei die Strahlüberwachungsinformationen anzeigen:
einen Offset, wobei der Offset ein Offset einer Überwachungszeiteinheit relativ zu einer Anfangszeiteinheit eines Überwachungszeitraums innerhalb des Überwachungszeitraums ist; und/oder
einen Suchraum, wobei der Suchraum eine Menge von Zeit-Frequenz-Ressourcen, in denen ein Strahl überwacht wird, in Zeit-Frequenz-Ressourcen innerhalb des Überwachungszeitraums ist.

3. Verfahren nach Anspruch 1, wobei die Strahlüberwachungsinformationen anzeigen:
Überwachen aller durch die Strahlanzeige-Informationen angezeigten Strahlen in jedem Symbol; oder
Überwachen eines oder einiger von durch die Strahlanzeige-Informationen angezeigten Strahlen in jedem Symbol.

4. Verfahren nach einem der Ansprüche 1 bis 3, wobei die Strahlkonfigurationsinformationen ferner einen Überwachungszeitraum eines Strahls umfassen.

5. Verfahren nach einem der Ansprüche 1 bis 4, wobei die Strahlanzeige-Informationen eine oder mehrere der folgenden Informationen umfassen: einen Index eines Strahls, einen Index eines mit einem Strahl korrespondierenden Antennenanschlusses, einen Index eines mit einem Strahl korrespondierenden Referenzsignals, einen Zeitindex eines Downlink-Synchronisationssignalblocks, BPL-Informationen (BPL = "Beam Pair Link") oder QCL-Informationen (QCL = "Quasi Co-Location"), die mit einem Strahl korrespondieren.

6. Kommunikationsverfahren, **dadurch gekennzeichnet, dass** es Folgendes umfasst:
Senden (S101), durch ein Endgerät, von Fähigkeitsinformationen des Endgeräts an eine Basisstation, wobei die Fähigkeitsinformationen Folgendes umfassen:
Informationen über eine Fähigkeit des Endgeräts zum sequenziellen Überwachen mehrerer Strahlen; und wobei die Fähigkeitsinformationen dafür nutzbar sind, dass die Basisstation Strahlkonfigurationsinformationen bestimmt; wobei die Fähigkeit des Endgeräts zum sequenziellen Überwachen mehrerer Strahlen eine Strahlumschaltfähigkeit des Endgeräts ist und die Strahlumschaltfähigkeit anzeigt, dass das Endgerät eine Strahlumschaltung in jedem Symbol implementieren kann;
Empfangen (S104) der Strahlkonfigurationsinformationen durch das Endgerät von der Basisstation, wobei die Strahlkonfigurationsinformationen Strahlanzeige-Informationen und Strahlüberwachungsinformationen umfassen; und
Kommunizieren mit der Basisstation basierend auf den Strahlkonfigurationsinformationen durch das Endgerät.

7. Verfahren nach Anspruch 6, wobei die Strahlüberwachungsinformationen Folgendes anzeigen:
einen Offset, wobei der Offset ein Offset einer Überwachungszeiteinheit relativ zu einer Anfangszeiteinheit eines Überwachungszeitraums innerhalb des Überwachungszeitraums ist; und/oder
einen Suchraum, wobei der Suchraum eine Menge von Zeit-Frequenz-Ressourcen, in denen ein Strahl überwacht wird, in Zeit-Frequenz-Ressourcen innerhalb des Überwachungszeitraums ist.

8. Verfahren nach Anspruch 6, wobei die Strahlüberwachungsinformationen anzeigen:
Überwachen aller durch die Strahlanzeige-Informationen angezeigten Strahlen in jedem Symbol; oder
Überwachen eines oder einiger von durch die Strahlanzeige-Informationen angezeigten Strahlen in jedem Symbol.

9. Verfahren nach einem der Ansprüche 6 bis 8, wobei die Strahlkonfigurationsinformationen ferner einen Überwachungszeitraum eines Strahls umfassen.

10. Verfahren nach einem der Ansprüche 6 bis 9, wobei die Strahlanzeige-Informationen eine oder mehrere der folgenden Informationen umfassen: einen Index eines Strahls, einen Index eines mit einem Strahl korrespondierenden Antennenanschlusses, einen Index eines mit einem Strahl korrespondierenden Referenzsignals, einen Zeitindex eines Downlink-Synchronisationssignalblocks, BPL-Informationen (BPL = "Beam Pair Link") oder QCL-Informationen (QCL = "Quasi Co-Location"), die mit einem Strahl korrespondieren.

11. Basisstation, die konfiguriert ist, das Verfahren nach einem der Ansprüche 1 bis 5 durchzuführen.

12. Endgerät, das konfiguriert ist, das Verfahren nach einem der Ansprüche 6 bis 10 durchzuführen.

13. Computerspeichermedium, das konfiguriert ist, ein Computerprogramm zu speichern, wobei, wenn das Computerprogramm durch eine Basisstation ausgeführt wird, es bewirkt, dass die Basisstation das Verfahren nach einem der Ansprüche 1 bis 5 durchführt.

14. Computerspeichermedium, das konfiguriert ist, ein Computerprogramm zu speichern, wobei, wenn das Computerprogramm durch ein Endgerät ausgeführt wird, es bewirkt, dass das Endgerät das Verfahren nach einem der Ansprüche 6 bis 10 durchführt.

15. Computerprogrammprodukt, wobei, wenn das Computerprogrammprodukt durch eine Basisstation ausgeführt wird, es bewirkt, dass die Basisstation das Verfahren nach einem der Ansprüche 1 bis 5 durchführt, oder,
wenn das Computerprogrammprodukt durch ein Endgerät ausgeführt wird, es bewirkt, dass das Endgerät das Verfahren nach einem der Ansprüche 6 bis 10 durchführt.

## Revendications

1. Procédé de communication, **caractérisé par le fait qu'**il comprend de :
recevoir (S101), par une station de base, des informations de capacité à partir d'un terminal, dans lequel les informations de capacité comprennent : des informations sur une capacité du terminal à surveiller séquentiellement de multiples faisceaux ; dans lequel la capacité du terminal à surveiller séquentiellement de multiples faisceaux est une capacité de commutation de faisceau du terminal, et la capacité de commutation de faisceau indique que le terminal peut mettre en œuvre une commutation de faisceau sur chaque symbole ;
générer (S102), par la station de base, des informations de configuration de faisceau basées sur les informations de capacité du terminal, dans lequel les informations de configuration de faisceau comprennent des informations d'indication de faisceau et des informations de surveillance de faisceau ; et
envoyer (S104), par la station de base, les informations de configuration de faisceau au terminal.

2. Procédé selon la revendication 1, dans lequel les informations de surveillance de faisceau indiquent:
un décalage, dans lequel le décalage est un décalage d'une unité de temps de surveillance par rapport à une unité de temps de début d'une période de surveillance dans la période de surveillance ; et/ou
un espace de recherche, dans lequel l'espace de recherche est un ensemble de ressources temps-fréquence, sur lequel un faisceau est surveillé, dans des ressources temps-fréquence dans la période de surveillance.

3. Procédé selon la revendication 1, dans lequel les informations de surveillance de faisceau indiquent :
la surveillance, sur chaque symbole, de tous les faisceaux indiqués par les informations d'indication de faisceau ; ou
la surveillance, sur chaque symbole, d'un ou de plusieurs parmi les faisceaux indiqués par les informations d'indication de faisceau.

4. Procédé selon l'une quelconque des revendications 1 à 3, dans lequel les informations de configuration de faisceau comprennent en outre une période de surveillance d'un faisceau.

5. Procédé selon l'une quelconque des revendications 1 à 4, dans lequel les informations d'indication de faisceau comprennent un ou plusieurs éléments des informations suivantes : un indice d'un faisceau, un indice d'un port d'antenne correspondant à un faisceau, un indice d'un signal de référence correspondant à un faisceau, un indice temporel d'un bloc de signal de synchronisation de liaison descendante, des informations de liaison par paire de faisceaux, BPL, ou des informations de quasi-co-localisation, QCL, correspondant à un faisceau.

6. Procédé de communication, **caractérisé par le fait qu'**il comprend de :
envoyer (S101), par un terminal, des informations de capacité du terminal à une station de base, dans lequel les informations de capacité comprennent : des informations sur une capacité du terminal à surveiller séquentiellement de multiples faisceaux ; et les informations de capacité sont utilisables par la station de base pour déterminer des informations de configuration de faisceau ; la capacité du terminal à surveiller séquentiellement de multiples faisceaux étant une capacité de commutation de faisceau du terminal, la capacité de commutation de faisceau indiquant que le terminal peut mettre en œuvre une commutation de faisceau sur chaque symbole ;
recevoir (S104), par le terminal, les informations de configuration de faisceau à partir de la station de base, dans lequel les informations de configuration de faisceau comprennent des informations d'indication de faisceau et des informations de surveillance de faisceau ; et
communiquer, par le terminal, avec la station de base sur la base des informations de configuration de faisceau.

7. Procédé selon la revendication 6, dans lequel les informations de surveillance de faisceau indiquent :
un décalage, dans lequel le décalage est un décalage d'une unité de temps de surveillance par rapport à une unité de temps de début d'une période de surveillance dans la période de surveillance ; et/ou
un espace de recherche, dans lequel l'espace de recherche est un ensemble de ressources temps-fréquence, sur lequel un faisceau est surveillé, dans des ressources temps-fréquence dans la période de surveillance.

8. Procédé selon la revendication 6, les informations de surveillance de faisceau indiquant
la surveillance, sur chaque symbole, de tous les faisceaux indiqués par les informations d'indication de faisceau ; ou
la surveillance, sur chaque symbole, d'un ou de plusieurs parmi les faisceaux indiqués par les informations d'indication de faisceau.

9. Procédé selon l'une quelconque des revendications 6 à 8, dans lequel les informations de configuration de faisceau comprennent en outre une période de surveillance d'un faisceau.

10. Procédé selon l'une quelconque des revendications 6 à 9, dans lequel les informations d'indication de faisceau comprennent un ou plusieurs éléments parmi les informations suivantes : un indice d'un faisceau, un indice d'un port d'antenne correspondant à un faisceau, un indice d'un signal de référence correspondant à un faisceau, un indice temporel d'un bloc de signal de synchronisation de liaison descendante, des informations de liaison par paire de faisceaux, BPL, ou des informations de quasi-co-localisation, QCL, correspondant à un faisceau.

11. Station de base, configurée pour exécuter le procédé selon l'une quelconque des revendications 1 à 5.

12. Terminal, configuré pour exécuter le procédé selon l'une quelconque des revendications 6 à 10.

13. Support de stockage informatique, configuré pour stocker un programme informatique, dans lequel, lorsque le programme informatique est exécuté par une station de base, il amène la station de base à exécuter le procédé selon l'une quelconque des revendications 1 à 5.

14. Support de stockage informatique, configuré pour stocker un programme informatique, dans lequel, lorsque le programme informatique est exécuté par un terminal, il amène le terminal à exécuter le procédé selon l'une quelconque des revendications 6 à 10.

15. Produit de programme informatique, dans lequel, lorsque le produit de programme informatique est exécuté par une station de base, il amène la station de base à exécuter le procédé selon l'une quelconque des revendications 1 à 5 ou, lorsque le produit de programme informatique est exécuté par un terminal, il amène le terminal à exécuter le procédé selon l'une quelconque des revendications 6 à 10.
